# EUROPEAN PATENT SPECIFICATION

(11) **EP 0 723 481 B1**
(45) Date of publication and mention of the grant of the patent: **24.03.1999**
(21) Application number: 94929600.8
(22) Date of filing: 14.10.1994
(51) Int. Cl.: B05B 15/12, B04C 5/28, B05B 15/04

(54) **POWDER RECOVERY MODULE**
PULVERRÜCKGEWINNUNGS-EINHEIT
MODULE DE RECUPERATION DE POUDRE

(30) Priority: 14.10.1993 GB 9321239
(43) Date of publication of application: 31.07.1996
(73) Proprietor: NORDSON CORPORATION, Westlake Ohio 44145-1148 (US)
(72) Inventor: FROST, Ivan E., 1 Prestwick Close, Cheshire SK10 2TH (GB); PERRIN, Robert E., 10 Coventry Avenue, Stockport SK3 0S (GB)
(74) Representative: Findlay, Alice Rosemary
(86) International application number: GB9402253
(87) International publication number: WO9510365

(56) References cited:
- EP-A- 0 350 628
- EP-A- 0 384 236
- CH-A- 331 828
- DE-A- 3 715 470
- DE-A- 4 037 459
- US-A- 5 107 756

## Description

This invention relates to powder spray coating and in particular to the recovery of powder which has not adhered to the article to be coated, from a powder spray booth.

In a powder spray booth, the powder which does not adhere to the object to be coated is known as 'overspray'. Overspray powder may miss the object to be coated, rebound from the surface of the object, or be deflected by the electrostatic fields within the spray booth toward other grounded surfaces such as the walls of the spray booth or the conveyor system from which the objects are suspended.

Filter cartridges have been used to recover overspray from powder spray booths, and these are capable of removing substantially all the overspray powder from the spray booth exhaust air so that the powder may be reused. Such filter cartridges require frequent cleaning in order to prevent them from becoming blocked or clogged with powder and this is usually carried out by providing means to blow pulses of pressurised air through the filters in the reverse direction to dislodge the powder adhering thereto.

Furthermore, if it is desired to change the powder for one of a different colour or grade, it is necessary to change the filter cartridges so that the powder is not contaminated.

Replacing the filter cartridges with a new set of filter cartridges in the same filter module is a time-consuming process and causes delay in the powder coating operation. In order to exchange the filter cartridges with less delay, removable filter cartridge modules have been used so that when it is necessary to change the colour of powder, the existing filter module is exchanged for one which is dedicated to the particular new colour required. However, where a spray booth is used to coat a succession of objects with a number of different colours of powder, it is necessary to have a corresponding number of filter modules, which is expensive and takes up a large area for storing the modules not in use.

To overcome these problems, cyclone separators have been used either instead of, or in conjunction with, filter cartridges. Such cyclone separators are effective in removing the majority of the overspray powder from the spray booth exhaust air and are easier to clean than filters because very little powder is deposited inside the cyclone housing.

Heretofore, the cyclone separators used in such powder recovery modules have either been very large single or dual, side-by-side cyclones having tangential feed inlets, or of the vertical feed type. For example, US-A-5107756 discloses a powder booth apparatus comprising a cartridge filter cabinet in combination with one or more cyclone separators. The inlet ducts of the cyclone separators are scrolled to impart a centrifugal force to the air and particulate flow.

In the vertical feed type of cyclone, the air-entrained overspray powder is fed vertically downwards from a common inlet manifold into the separators, and a circumferential velocity is imparted thereto by a number of radial vanes. The overspray powder is separated from the air by the combined effects of centrifugal and gravitational forces and falls to the bottom of the separators, there to be collected and removed. The air is then directed vertically upwardly through ducts, one per cyclone separator, which pass through the centre of the vanes and into the common inlet manifold to an exhaust manifold, there to be exhausted to atmosphere or to pass through a further powder recovery module containing a number of filter cartridges to remove any fine powder particles entrained in the air.

Such vertical feed cyclone separators, when arranged in a module as a cluster of small cyclones renders the module difficult to clean thoroughly in that powder tends to impinge on and adhere to, the inlet areas of the cyclones and the vanes directly below the inlet areas and to the vertical exhaust ducts, passing through the centre of the vanes. These surfaces are difficult to clean properly, particularly where there is a large number of cyclone separators because these areas are generally not easily accessible. The cleaning of such a powder recovery module, when changing the colour of powder to be recovered thereby, for example, is a lengthy process.

The present invention is directed at a powder recovery module comprising at least two tangential feed cyclone separators, the cyclone separators having feed channels which lie in substantially the same horizontal plane, at least one pair of cyclone separators being disposed so that the feed channels thereto are adjacent, the cyclone separators and the feed channels thereto being disposed so that each feed channel has a separate inlet. According to the invention, the module has one face for removably mounting to a wall of a powder spray booth, in that the feed channels taper inwardly towards the cyclone separators, in that the inlets to the feed channels lie in a common plane forming at least part of the one face of the module, and when the module is mounted to the wall of said booth, the inlets are disposed close to, or towards, the ceiling of said booth, and a channel is defined by the module and said booth therebetween to deliver at least some of the air-entrained powder from an overspray intake close to, or adjacent, the floor of said booth to the inlets, a portion of the channel being formed by at least a portion of the one face of the module.

With such an arrangement, the use of tangential feed cyclone separators in combination with tapering feed channels thereto enables a greater proportion of oversprayed powder to be separated from the spray booth exhaust air. Additionally, the configuration and disposition of the cyclone separators and the feed channels thereto enables a comparatively large number of small cyclone separators to be mounted within a given volume of module. The geometrical arrangement of the inlets to the cyclone separator feed channels, and the configuration of the tangential feed cyclone separators, enables substantially all of the surfaces to which oversprayed powder might adhere, to be rapidly and thoroughly cleaned, by means of an air hose, for example.

The channel serves to smooth out the flow of air-entrained powder drawn from the bottom of the powder spray booth, where the flow is turbulent and the powder air density variable, so that it arrives at the inlets to the feed channels in a steady flow of constant density. Preferably the channel is so configured as to ensure that substantially equal amounts of air-entrained powder enter the inlet to each feed channel, thereby permitting the cyclone separators to operate efficiently and the maximum amount of powder to be recovered by the module.

The overspray intake may comprise one or more holes in the wall of the spray booth close to or adjacent the floor thereof, the channel being formed by the space between the wall of the powder spray booth and the said one face of the module when the module is mounted to the powder spray booth wall. Preferably the channel is parallel-sided so as to promote the smooth and even flow of air-entrained powder into the inlets. It has been found that, if the wall of the spray booth forming one side of the channel is flat, turbulence is created in the spray booth to such an extent that powder is discharged from the ends of the booth. It is preferable, therefore, that the wall of the spray booth be louvred, or slatted, so as to even out the flow and to reduce turbulence.

Preferably, the powder recovery module comprises at least three tangential feed cyclone separators within the module which are disposed in two adjacent parallel rows. The first row may comprise at least two cyclone separators, the feed channels of each pair of said cyclone separators being adjacent, and the second row may comprise at least one cyclone separator, the first row being disposed substantially parallel to the said one face and closer thereto than the second row.

The feed channel to each cyclone separator in the second row may touch, but not intersect, a cyclone separator in the first row.

Such an arrangement minimises the volume of module required to house a given number of cyclone separators whilst maintaining the advantages of efficient powder separation and ease of cleaning afforded by tangential feed cyclone separators with tapering feed channels.

The horizontal distance between the outermost edges of the outermost feed channels is preferably substantially less than the distance obtained by adding the diameters of each of the cyclone separators in the module.

Such an arrangement maximises the number of cyclone separators which may be used for a given area of a powder spray booth wall.

Preferably, the cyclone separators are of substantially the same powder separation capacity, and differ only in the shape or configuration of their respective feed channels.

The cyclone separators are preferably so disposed within the module as to discharge powder into a common powder collector. With such an arrangement, the powder can be easily removed for re-use.

Preferably, the common powder collector is an inverted cone removably carried on a wheeled frame or dolly. When the collector is sealed to the cyclones it is lifted by air pistons up off the dolly. This is superior to other recovery cart designs such as is shown, for example, in Canadian Patent Application 2,080,977 where the entire weight of the recovery cart, including the wheels, must be lifted up off the floor. In use powder is pumped from the bottom of the hopper to the main powder feed hopper for re-use.

Another advantage of such an arrangement is that when changing colours, the conical hopper is lightweight enough to be easily lifted off the dolly and removed for cleaning the dusting of powder left in the hopper. The conical hopper is then placed back in the dolly and sealed to the cyclones, which have by now also been cleaned so that once the booth is cleaned, the system is ready for the next colour of powder.

The advantage of this design over common recovery hopper designs for other multi-cyclone collectors such as those shown in US Patent No. 4,509,292 and European Patent No. 0350628 B1 is that a recovery hopper for each colour is not required. Instead, a single recovery hopper can be used for all colours of powder which saves considerable cost.

The cyclone separators preferably discharge the exhaust air into a common air exhaust manifold. The air from this manifold may be exhausted direct to atmosphere, or a further filter system, which may comprise a removable filter cartridge module, which may be provided in order to separate the remaining small amount of powder from the exhaust air.

The invention will now be described by way of example and with reference to the accompanying drawings in which:
Figures 1a, 1b and 1c are, respectively, a schematic front elevation, plan and end elevation of a powder spray coating apparatus comprising a powder recovery module in accordance with the invention;
Figure 2 is an end elevation, similar to that of Figure 1c, but showing the powder recovery module replaced by a filter cartridge powder recovery module;
Figures 3a to g are schematic plans of powder recovery modules in accordance with the invention and showing the disposition of different numbers of tangential feed cyclone separators;
Figures 4a and 4b are schematic front and rear elevations of a powder recovery module in accordance with the invention having four cyclone separators, and
Figure 5 is a cross-section along the line V-V of Figure 4a.

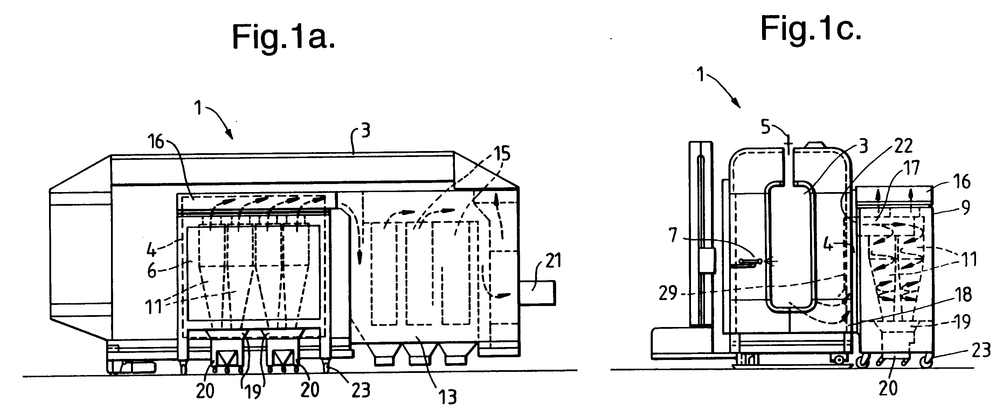

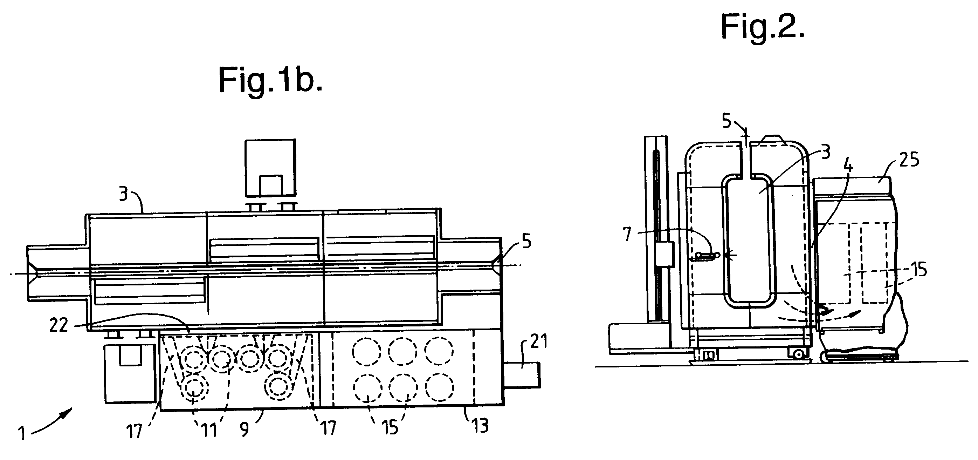

The electrostatic powder spray coating apparatus generally indicated at 1 shown in Figures 1a to 1c comprises a spray booth 3 having a conveyor 5 (see Figure 1c) from which objects (not shown) are suspended and conveyed through the booth 3 where they are coated with powder by a number of spray devices 7. The rear wall of the booth opposite the spray gun openings (see Fig. 2) has a large opening 6 framed by a rectangular lip 4 which projects about five inches (about 13cm) out from the side of the booth. A compressible gasket (not shown) is carried on the rearward edge of this lip. The forward face 22 of a powder recovery module 9, shown here as containing six tangential feed cyclone separators 11, all disposed in the same horizontal plane, is compressed and sealed against this gasket by clamps (not shown) which are carried on lip 4. Also mounted to the booth 3 is a further powder recovery module 13 containing a number of filter cartridges 15. Exhaust air and air-entrained oversprayed powder is induced by the fan 21 to flow from the spray booth 3, through the modules 9, into a hood 16, which is supported in cantilever fashion from the wall of booth 3, and from there into module 13, as indicated generally by the arrows. The powder cyclone module is removable, and is sealed against the lip 4 as described above for air and powder entering the cyclones 11 and against the hood 16 for air leaving the cyclones 11 by a vertically movable lifter (not shown) having a flexible seal or gasket which provides an air-tight seal.

Overspray is drawn into the cyclone separators 11 from the booth 3 by being drawn through an overspray intake 18, which is formed between the bottom edge of a louvred, or slatted, plate 29, which is removably secured across the upper two-thirds of opening 5, and the bottom edge of lip 4. The overspray intake 18 thus comprises a rectangular opening positioned near the floor of the booth. Overspray is also drawn through the louvres (schematically illustrated) of the plate 29, which reduces turbulence in the booth by promoting a smoother and more even flow of air-entrained powder into the inlets 27 of the cyclone separators 11.

The plate 29 may, for example, be provided with holes which are slipped on to corresponding fixed pegs angled upwards from the interior wall of the booth so that the plate can be easily hung on the back wall of the booth to cover the upper two-thirds of opening 6, or removed from the booth for reasons explained below.

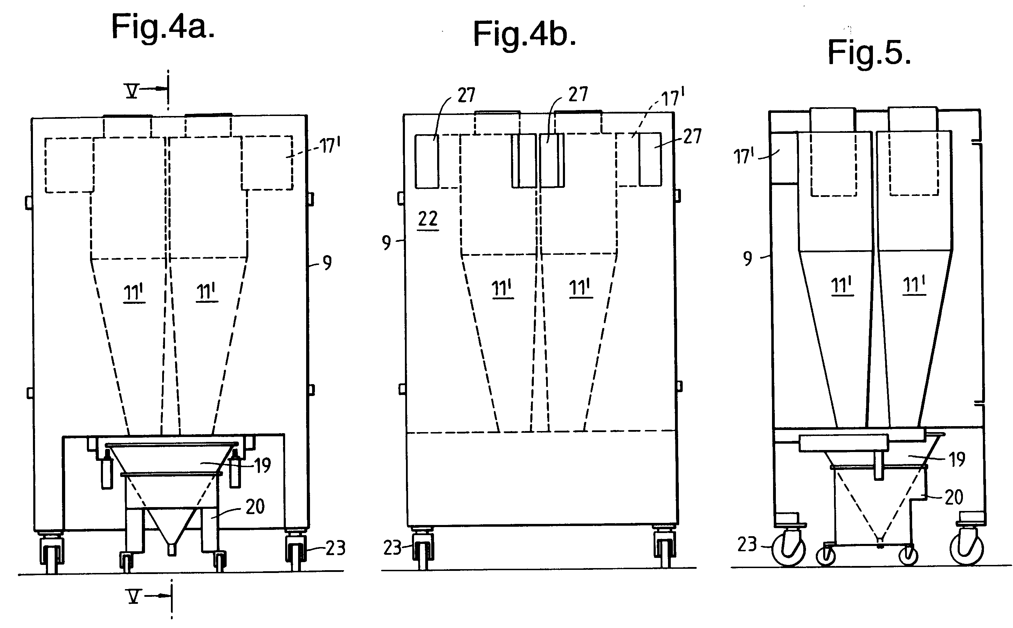

Oversprayed powder passes from inlet 18 and through the louvres in the plate 29 up the slot or gap formed between the plate 29 and the forward face 22 of module 9 into the inlets 27 (see Fig. 4b) to the cyclone separators 11 and along tapering feed channels 17 (see Figure 1b) which also lie in the same horizontal plane. The slot or gap between the louvred plate 29 and module 9 is bounded along the top and sides by the lip 4.

The position of the overspray intake 18 close to, or adjacent, the floor of the booth 3 is advantageous because oversprayed powder within the booth 3 tends to fall under the influence of gravity towards the floor of the booth 3.

The vertical channel serves to even out the flow of air-entrained powder drawn from the booth 3 so that a substantially constant and equal flow of air-entrained powder is delivered into each of the feed channels 17.

The taper of the feed channels 17 accelerates the overspray as it enters the cyclone separators 11, enhancing the powder separating efficiency thereof. The oversprayed powder, under the influence of centrifugal and gravitational forces, falls to the bottom of the cyclone separators 11 where it is collected in one or more cone-shaped containers 19 for eventual re-use. The container(s) 19 are each mounted on a wheeled cradle or dolly, 20 so that it/they may be moved away from the module 9 in order to recover the powder therefrom for reuse.

Container 19 is an inverted cone which is mounted onto cradle 20 by gravity. Powder can be pumped out of the bottom of container 19 through an outlet 24 (see Fig. 4a) by means of pump (not shown) to a sieving device for re-use. Any powder which cannot be pumped out of the container 19 at the end of a colour run can be removed by switching off fan 21, thereby removing the suction effect in the cyclones 11, lifting the lightweight container 19 up off cradle 20 and cleaning the powder out of container 19 either using a vacuum cleaner, or by blowing the powder out in a ventilated area.

The clean container 19 can then be placed back on cradle 20 and wheeled under the cyclone module 9. Air pistons 26 can then be actuated to engage a flange 28 projecting from the outer edge of container 19 to seal container 19 to the cyclones. Since the container 19 is relatively lightweight an effective seal is more easily produced with less energy consumption. Preferably, container 19 is made of thin gauge stainless steel which enables container 19 to be strong, light and to resist powder adhesion thereto. The fan 21 can then be restarted and spraying can begin again.

During the normal operation of the booth, the exhaust air, which contains only a small amount of oversprayed powder, passes from the cyclone separators 11 in the powder recovery module 9 into the powder recovery module 13, within which the remaining powder is filtered out by the filter cartridges 15. The clean exhaust air is then drawn out of the system by the fan 21 and exhausted to atmosphere.

It has been found that such tangential feed cyclone separators are up to 97% efficient, that is they separate up to 97% of the oversprayed powder from the spray booth exhaust air passed through them, and most of this separated powder can be recovered in the containers 19 for re-use. A small proportion of the powder adheres to the internal surfaces of the cyclone separators 11, which has to be cleaned before the powder is changed to another colour. Cleaning separators 11 is necessary so that the second colour of powder recovered in the container 19 is not contaminated by the first colour of powder previously adhering to the inside of the cyclone separators 11. The configuration and disposition of the cyclone separators 11 of this invention, therefore, is such that any adhered powder can easily be cleaned off, as described below.

The powder recovery module 9 has a face 22 which is adapted for removably mounting to the lip 4 on the back wall of the spray booth 3, as described above, and the module 9 is mounted on wheels 23 so that it may be moved for cleaning.

The powder spray booth 3 may be configured so that the powder recovery module 9 in accordance with the invention may be replaced with a conventional filter cartridge powder recovery module 25, as shown in Figure 2, in order to recover substantially all of the oversprayed powder during long runs of a particular colour of powder substantially all of which the user would like to recover. In these cases, the user would have one cartridge module 25 for each colour of powder and would use the cyclone module 9 for all other colours of powder with the majority of the oversprayed powder of these other colours collected from the bottom of cyclone module 9, and the remainder of the overspray exhausted out of the top of cyclone module 9 into the common final filter module 13 where it would be mixed together and scrapped. When the cartridge module 25 is utilised the plate 29 would be removed from the back of the booth wall because a rectangular inlet is already provided in the lower portion of the forward face of module 25 below the lower end of the cartridges 15.

Thus, when a filter cartridge module 25 is in use, air-entrained powder is drawn from the booth 3 into the filter cartridges 15 at a level adjacent the floor of the booth 3 (as shown by the arrows in Figure 2). Substantially all of the powder is trapped by the filters 15 in the module 25 and the filtered air is drawn from the module 25 and thence through the recovery module 13 as described above.

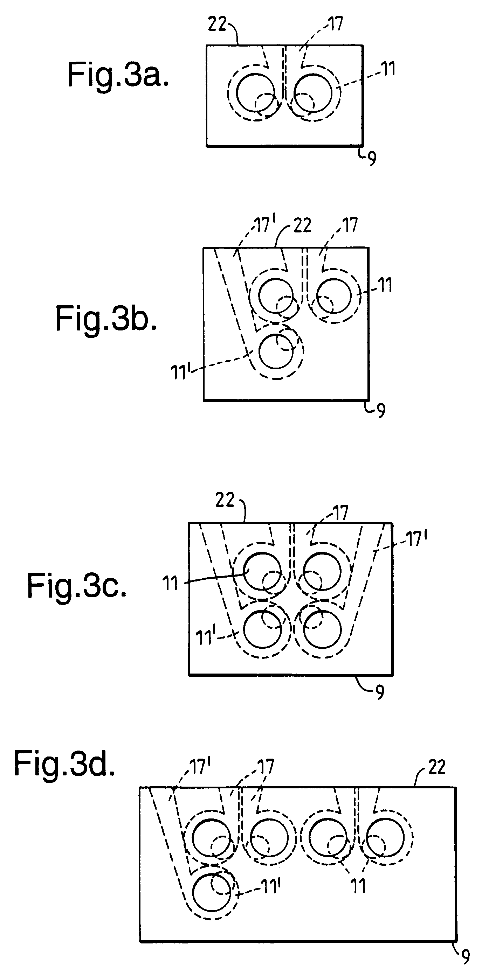

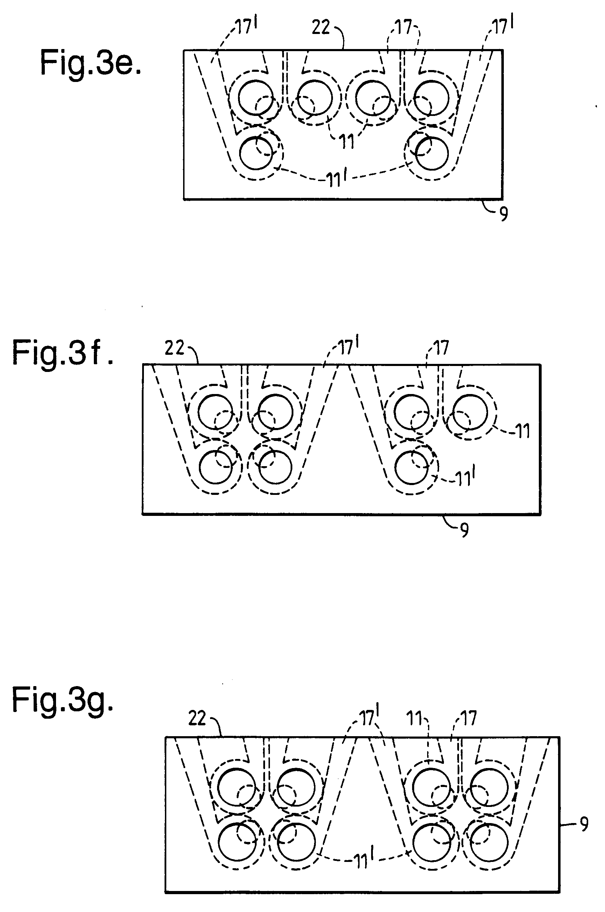

Figures 3a to g illustrates the disposition and arrangement of between 2 and 8 tangential feed cyclone separators 11,11' within a powder recovery module 9 in accordance with the invention. Each cyclone separator 11 has a 1700 m³/s (1000 cubic foot per minute) capacity and is disposed in the same horizontal plane. It will be seen that a minimum of two cyclone separators 11 are provided, with pairs of cyclones 11 having adjacent tapering feed channels 17 in a first row of cyclones 11 adjacent the face 22 of the module which is mounted to the spray booth (not shown) and further cyclones 11' being arranged in a second row adjacent, parallel to and behind the first row, the tapering feed channels 17' to the cyclones 11' in the second row being in the same horizontal plane as the feed channels 17 in the first row and configured so as to touch but not intersect the outer wall of a cyclone 11 in the first row. Such a configuration enables the maximum number of cyclones 11, 11' to fit within the volume of the module 9.

Figures 4a, 4b and 5 illustrate a powder recovery module 9 comprising four cyclone separators as in Fig. 3c, in more detail, and shows the wheeled powder container 19 more clearly. The face 22 of the module 9 which is removably mounted to the booth 3 is shown in Figure 4b, and the inlets 27 to the feed channels 17 are coplanar with this face. The configuration and disposition of the cyclone separators 11 and the feed channels 17 is such that the distance between the outermost edges of the outermost inlets 27 is less than the combined diameters of the four cyclone separators 11.

In order to clean the powder recovery module 9 it is only necessary, once the module 9 has been demounted from the side of the booth 3, to blow clean air into each of the inlets 27, and over the flat face of the module 9 therebetween. It is a simple and quick operation to direct a high pressure air hose into each inlet 27 and this will clear substantially all the powder which has adhered to the internal surfaces of the cyclones, the majority of which will lie on the surfaces of the feed channels 17 and on the internal wall of the cyclone separators 11 immediately opposite the feed channels 17. The design of the powder recovery module 9 is such that there are no other areas which require substantial cleaning, any minor amounts of powder which adhere to other areas of the cyclone separators 11 may be removed easily by removing container 9 with the fan 21 turned off and then turning fan 21 on again; this causes a rush of air through the bottom of the cyclone 11 and into hood 16, which is effective to remove any powder remaining in the cyclones 11.

Given the above description, a quick and efficient powder colour change can be accomplished as follows.

Firstly, the spraying of the first colour of powder through the powder spraying devices 7 is ceased. The powder supply lines to the spray devices 7 and the devices themselves are cleaned to be made ready to spray powder of a different colour, as is known in the art.

Next the inside of the booth 3 is cleaned by an operator with a high pressure air hose and/or brushes. This is done by the operator entering the booth 3. Whilst this is going on, fan 21 is still operating to draw away powder. The operator cleans the slatted panel 29 and then removes it so as to clean the forward face 22 of the recovery module 9 and the inlets 27 of the cyclones 11.

The fan 21 is then switched off so that the container 19 can be lowered and removed for cleaning, as described above. The operator then cleans the bottom portion of the module 9 where the container 19 was located using a vacuum cleaner, and then the fan 21 is switched on again. This causes a rush of air up through the cyclones 11 which removes any remaining powder residues within the cyclones 11. The fan 21 is then switched off again briefly so as to replace cleaned container 19. Once the fan 21 is switched on once more, the apparatus is clean and ready to operate using a second colour powder.

## Claims

1. A powder recovery module (9) comprising at least two tangential feed cyclone separators (11), the cyclone separators (11) having feed channels (17) which lie in substantially the same horizontal plane, at least one pair of cyclone separators (11) being disposed so that the feed channels (17) thereto are adjacent, the cyclone separators (11) and the feed channels (17) thereto being disposed so that each feed channel (17) has a separate inlet (27), characterised in that the module (9) has one face (22) for removably mounting to a wall of a powder spray booth (3), in that the feed channels (17) taper inwardly towards the cyclone separators (11), in that the inlets (27) to the feed channels (17) lie in a common plane forming at least part of the one face (22) of the module (9), and when the module (9) is mounted to the wall of said booth (3), the inlets (27) are disposed close to, or towards, the ceiling of said booth (3), and a channel is defined by the module (9) and said booth (3) therebetween to deliver at least some of the air-entrained powder from an overspray intake (18) close to, or adjacent, the floor of said booth (3) to the inlets (27), a portion of the channel being formed by at least a portion of the one face (22) of the module (9).

2. A powder recovery module as claimed in Claim 1 comprising at least three tangential feed cyclone separators (11,11') wherein the cyclone separators are disposed in two adjacent parallel rows, a first row comprising too or more cyclone separators (11), the feed channels (17) of said cyclone separators (11) being adjacent, and a second row comprising at least one cyclone separator (11') , the first row being disposed substantially parallel to the said one face (22) and closer thereto than the second row.

3. A powder recovery module as claimed in Claim 1 or Claim 2 wherein the horizontal distance between the outermost edges of the outermost feed channels (17,17') is less than the distance obtained by adding the diameters of each of the cyclone separators (11,11') in the module (9).

4. A powder recovery module as claimed in any preceding claim wherein the cyclone separators (11,11') discharge powder into one or more common powder collectors (19).

5. A powder recovery module as claimed in Claim 4 comprising means to drive the or each common powder collector (19) upwardly away from the wheeled frame (20) to form an air seal against the bottom surface of the cyclone module (19).

6. A powder recovery module as claimed in Claim 4 or Claim 5 wherein the or each common powder collector (19) is conical.

7. A powder recovery module as claimed in any of Claims 4 to 6 wherein the or each common powder collector (19) is formed of thin-gauge stainless steel.

8. A powder recovery module as claimed in any preceding claim wherein the cyclone separators (11,11') discharge air into a common air exhaust manifold (16).

9. A powder recovery module as claimed in Claim 8 comprising means for mounting a filter cartridge module (13) to the air exhaust manifold (16).

10. A combination of a powder recovery module (9) of any preceding claim and a powder spray booth (3) wherein the channel is substantially parallel-sided.

11. A combination as claimed in Claim 10 wherein the channel comprises a rectangular lip (4) around an aperture (6) in the wall of the booth (3) to which the said one face (22) of the module (9) is removably mounted, at least the upper portion of the aperture (6) being closed off by a removable panel (29) mounted substantially parallel to the said one face (22) of the module (9).

12. A combination as claimed in Claim 11 wherein the removable panel (29) is louvred.

## Patentansprüche

1. Pulverrückgewinnungs-Einheit (9), umfassend mindestens zwei Zyklonabscheider (11) mit Tangentialzuführung, wobei die Zyklonabscheider (11) Zuführungskanäle (17) besitzen, die in der im wesentlichen gleichen horizontalen Ebene liegen, mindestens ein Paar Zyklonabscheider (11) so angeordnet ist, daß die dazugehörigen Zuführungskanäle (17) benachbart sind, die Zyklonabscheider (11) und die zugehörigen Zuführungskanäle (17) so angeordnet sind, daß jeder Zuführungskanal (17) einen separaten Einlaß (27) besitzt, gekennzeichnet dadurch, daß die Einheit (9) eine Fläche (22) zum lösbaren Befestigen an einer Wand einer Pulverspritzkabine (3) besitzt, daß die Zuführungskanäle (17) sich zu den Zyklonabscheidern (11) hin nach innen verjüngen, daß die Einlässe (27) zu den Zuführungskanälen (17) in einer gemeinsamen Ebene liegen, die mindestens einen Teil der einen Fläche (22) der Einheit (9) bildet, und wenn die Einheit (9) an der Wand der Kabine (3) befestigt ist, die Einlässe (27) dicht an der Decke der Kabine (3) oder zu dieser hin angeordnet sind, und dazwischen ein Kanal durch die Einheit (9) und die Kabine (3) abgegrenzt ist, um mindestens etwas von dem in Luft mitgeführten Pulver von einer Overspray-Eintrittsöffnung (18) dicht am Fußboden der Kabine (3) oder benachbart zu diesem an die Einlässe (27) abzugeben, wobei ein Teil des Kanales durch mindestens einen Teil der einen Fläche (22) der Einheit (9) gebildet wird.

2. Pulverrückgewinnungs-Einheit gemäß Anspruch 1, umfassend mindestens drei Zyklonabscheider (11,11') mit Tangentialzuführung, bei der die Zyklonabscheider in zwei benachbarten parallelen Reihen angeordnet sind, wobei eine erste Reihe zwei oder mehr Zyklonabscheider (11) umfaßt, die Zuführungskanäle (17) der Zyklonabscheider (11) benachbart sind, und eine zweite Reihe mindestens einen Zyklonabscheider (11') umfaßt, wobei die erste Reihe im wesentlichen parallel zu der einen Fläche (22) und dichter zu dieser als die zweite Reihe angeordnet ist.

3. Pulverrückgewinnungs-Einheit gemäß Anspruch 1 oder 2, bei der der horizontale Abstand zwischen den äußersten Rändern der äußersten Zuführungskanäle (17, 17') kleiner ist als der Abstand, der durch Addieren der Durchmesser jedes Zyklonabscheiders (11, 11') in der Einheit (9) erhalten wird.

4. Pulverrückgewinnungs-Einheit gemäß einem der vorhergehenden Ansprüche, bei dem die Zyklonabscheider (11, 11') Pulver in einen oder mehrere gemeinsame Pulversammler (19) austragen.

5. Pulverrückgewinnungs-Einheit gemäß Anspruch 4, umfassend Mittel zum Hochfahren des oder jedes gemeinsamen Pulversammlers (19) vom Fahrgestell (20) weg zum Bilden einer Luftabdichtung an der unteren Fläche der Zykloneinheit (19).

6. Pulverrückgewinnungs-Einheit gemäß Anspruch 4 oder 5, bei der der oder jeder gemeinsame Pulversammler (19) konisch ist.

7. Pulverrückgewinnungs-Einheit gemäß einem der Ansprüche 4 bis 6, bei der der oder jeder gemeinsame Pulversammler (19) aus dünnem Stainless-Steel ausgebildet ist.

8. Pulverrückgewinnungs-Einheit gemäß einem der vorhergehenden Ansprüche, bei der die Zyklonabscheider (11, 11') Luft in eine gemeinsame Abluftsammelleitung (16) austragen.

9. Pulverrückgewinnungs-Einheit gemäß Anspruch 8, umfassend Mittel zum Befestigen einer Filterpatroneneinheit (13) an der Abluftsammelleitung (16).

10. Kombination einer Pulverrückgewinnungseinheit (9) gemäß einem der vorhergehenden Ansprüche und einer Pulverspritzkabine (3), bei der der Kanal im wesentlichen planparallel ist.

11. Kombination gemäß Anspruch 10, bei der der Kanal einen rechteckigen Rand (4) um eine Öffnung (6) in der Wand der Kabine (3) herum umfaßt, an dem die eine Fläche (22) der Einheit (9) lösbar befestigt ist, wobei mindestens der obere Teil der Öffnung (6) durch eine lösbare Platte (29) abgeschlossen ist, die im wesentlichen parallel zu der einen Fläche (22) der Einheit (9) befestigt ist.

12. Kombination gemäß Anspruch 11, bei der die lösbare Platte (29) mit Luftschlitzen versehen ist.

## Revendications

1. Module de récupération de poudre (9) comprenant au moins deux séparateurs à cyclone (1) d'alimentation tangentielle, les séparateurs à cyclone (11) ayant des canaux d'alimentation (17) qui se situent sensiblement dans le même plan horizontal, au moins une paire de séparateurs à cyclone (11) étant disposée de manière à ce que les canaux d'alimentation (17) de ceux-ci soient adjacents, les séparateurs à cyclone (11) et les canaux d'alimentation (17) de ceux-ci étant disposés de manière à ce que chaque canal d'alimentation (17) présente un orifice d'admission séparé (27), caractérisé en ce que le module (9) présente une face (22) pour son montage de manière amovible sur une paroi d'une cabine de pulvérisation de poudre (3), en ce que les canaux d'alimentation (17) s'amincissent vers l'intérieur en direction des séparateurs à cyclone (11), en ce que les orifices d'admission (27) conduisant aux canaux d'alimentation (17) se trouvent dans un plan commun formant au moins une partie de la face (22) du module (9) et, lorsque le module (9) est monté sur la paroi de ladite cabine (3), les orifices d'admission (27) sont disposés près de, ou vers le plafond de ladite cabine (3) et un canal est défini par le module (9) et ladite cabine (3) entre eux pour délivrer au moins une partie de la poudre entraînée par l'air depuis une entrée (18) de pulvérisation en excès près, ou à proximité, du plancher de ladite cabine (3) jusqu'aux orifices d'admission (27), une partie du canal état formée par au moins une partie de ladite face (22) du module (9).

2. Module de récupération de poudre selon la revendication 1, comprenant au moins trois séparateurs à cyclone d'alimentation tangentielle (11, 11') dans lequel les séparateurs à cyclone sont disposés en deux rangées parallèles adjacentes, une première rangée comprenant deux ou plusieurs séparateurs à cyclone (11), les canaux d'alimentation (17) desdits séparateurs à cyclone (11) étant adjacents, et une seconde rangée comprenant au moins un séparateur à cyclone (11'), la première rangée étant disposée sensiblement parallèlement à ladite face (22) et plus près de celle-ci que la seconde rangée.

3. Module de récupération de poudre selon la revendication 1 ou la revendication 2, dans lequel la distance horizontale entre les bords les plus à l'extérieur des canaux d'alimentation les plus a l'extérieur (17, 17') est inférieure à la distance obtenue en ajoutant les diamètres de chacun des séparateurs à cyclone (11, 11') dans le module (9).

4. Module de récupération de poudre selon l'une quelconque des revendications précédentes, dans lequel les séparateurs à cyclone (11, 11') déchargent de la poudre dans un ou plusieurs collecteurs de poudre communs (19).

5. Module de récupération de poudre selon la revendication 4, comprenant des moyens pour entraîner le, ou chaque, collecteur de poudre commun (19) vers le haut et le détacher du châssis monté sur roulettes (20) afin de former un joint étanche à l'air contre la surface inférieure du module à cyclone (9).

6. Module de récupération de poudre selon la revendication 4 ou la revendication 5, dans lequel le, ou chaque, collecteur de poudre commun (19) est conique.

7. Module de récupération de poudre selon l'une quelconque des revendications 4 à 6, dans lequel le, ou chaque, collecteur de poudre commun (19) est formé en acier inoxydable de faible épaisseur.

8. Module de récupération de poudre selon l'une quelconque des revendications précédentes, dans lequel les séparateurs à cyclone (11, 11') déchargent de l'air dans un collecteur d'échappement de l'air commun (16).

9. Module de récupération de poudre selon la revendication 8, comprenant des moyens pour monter un module à cartouche filtrante (13) sur le collecteur d'échappement de l'air (16).

10. Combinaison d'un module de récupération de poudre (9) selon l'une quelconque des revendications précédentes et d'une cabine de pulvérisation de poudre (3) dans laquelle le canal est sensiblement à parois latérales.

11. Combinaison selon la revendication 10, dans laquelle le canal comprend une lèvre rectangulaire (4) placée autour d'une ouverture (6) dans la paroi de la cabine (3) sur laquelle ladite face (22) du module (9) est montée de manière amovible, au moins la partie supérieure de l'ouverture (6) étant fermée par un panneau amovible (29) monté sensiblement parallèle à ladite face (22) du module (9).

12. Combinaison selon la revendication 11, dans laquelle le panneau amovible (29) est muni de canaux de ventilation.
